# EUROPEAN PATENT APPLICATION

(11) **EP 4 834 113 A1**
(43) Date of publication of application: **04.11.2026**
(21) Application number: 25173633.6
(22) Date of filing: 30.04.2025
(51) Int. Cl.: A22C 9/00, A22C 17/00, A23B 4/28, A23L 13/72, B65G 23/04, B65G 21/10, B65G 39/00

(54) **INJECTOR APPARATUS WITH COMPACT CONVEYOR MODULE**

(71) Applicant: Günther Maschinenbau GmbH, 64859 Eppertshausen (DE)
(72) Inventor: NIKLAS, Rudolph, 63179 Obertshausen (DE)
(74) Representative: Eisenführ Speiser

(57) **Abstract**

The present invention relates to an injector apparatus (100) for injecting an injectate, like brine, into a food product, and a conveying module (200) for an injector apparatus (100). The apparatus (100) comprises a frame work (10), at least one injector module (20), supported by the frame work (10), and at least one conveying module (200) arranged approximately horizontally, for conveying a food product to be treated to the injector module (20) and discharging the treated food product from the injector apparatus (100) in a conveying direction (CD). In the inventive injector apparatus (100), the conveying module (200) has a first deflection assembly (210) with at least a first deflection roller (211), a second deflection assembly (220) with at least a second deflection roller (221), and a conveyor belt (240) guided around the first and the second deflection rollers (211, 221). The first deflection assembly (210) is configured to be demountable from the injector apparatus (100) independently from the second deflection assembly (220).

## Description

The present invention related to an injector apparatus for injecting an injectate, like brine, into a food product. The apparatus comprises a frame work, at least one injector module, supported by the frame work, and conveying module for conveying a food product to be treated to the injector module and discharging the treated food product from the injector module in a conveying direction.

In practice, injector apparatuses are known, for injecting an injectate, like brine, into a food product, like meat or fish. Such an apparatus or injector includes a conveyor for conveying the food product to be treated through the injector, and an injector head arranged above the conveyor, which includes a plurality of injection needles, for injecting an injectate into the food product provided below the injection head on the conveyor. The injector head can be moved reversibly towards the food product such that the needles can penetrate the food product in order to deliver the injectate into the product.

From DE 43 12 946 A1, an injection apparatus is known, in which the food products are fed through said injector apparatus by a band conveyor arranged below a needle head.

Usually, the conveyor is arranged in an at least approximately U-shaped tunnel, for collecting the injectate, or brine, escaping from the food product or the injection needles when being pulled out of the food product, and for preventing the injectate to spray into the environment. The conveyor may be fixedly mounted to the injector, or may be provided as a conveyor unit which is removable attached to the injector.

These known injectors are difficult to clean and to maintain, particularly, in the case that the conveyor is fixedly mounted to the injector. Moreover, an injector, from which a conveyor unit may be removed from as a whole, is more easy to clean. However, the removal of the conveyor unit, due to its size and weight, requires additional devices, like a support and transport device.

Thus, it is an object of the present invention to provide an injection apparatus for treating food products, by which the above mentioned drawbacks may be overcome, and with which handling and cleaning of which is simplified.

According to the present invention, there is provided an injector apparatus for injecting an injectate, like brine, into a food product. The apparatus comprises a frame work, at least one injector module supported by the frame work, and at least one conveying module arranged approximately horizontally for conveying a food product to be treated to the injector module and discharging the treated food product from the injector module in a conveying direction. In the inventive injector apparatus, the conveying module has a first deflection assembly with at least a first deflection roller or turning pulley, a second deflection assembly with at least a second deflection roller or turning pulley, and a conveyor belt guided around the first and the second deflection rollers, wherein the first deflection assembly is configured to be de-mountable from the injector apparatus independently from the second deflection assembly.

The design of the inventive injector apparatus allows easy removal of the conveying module, e.g. for maintenance or cleaning, with reduced burden.

In a preferred embodiment of the inventive injector apparatus, the first deflection assembly is configured to reversibly relax or loosen the tension of the conveyor module. Thereby, a tension of the conveyor belt, which preferably is a predefined tension, may automatically be generated or manually adjusted. Moreover, this design allows an easy mounting and demounting of the conveyor belt.

For further enhancing mounting and demounting of the conveyor module, it is of advantage that a pivot axis is arranged between the first and second deflection rollers. This design can enable to pivot at least one of the first or second deflection assemblies, for mounting and demounting the conveyor module to or from the injector apparatus.

In a further advantage design, the first deflection assembly is configured to rotate around a pivot axis extending through the first deflection assembly. This allows an easy tensioning or detensioning or relaxing/loosening of the conveyor belt, whereby mounting and demounting of the conveyor module is further simplified.

It has to be noted that the conveyor belt may be relaxed or detensioned in various ways. Besides pivoting the first or the second deflection assembly, it is also possible to linearly shift one of the first or the second deflection assembly, e.g. by a linear guide device or a telescopic device.

The linear guide may be realized in various ways, e.g. by a dove-tail guide or a T-slot guide. In a simple design, one or more of the guide elements include one or more elongated holes, into which bolts or pins may engage.

In a preferred configuration, the first deflection assembly includes a pivot mechanism for reversibly pivoting the first deflection roller between a working position and a release position, about the pivot axis arranged between the first and second deflection rollers.

The pivot mechanism may include one or more hinges, or may be realized by mounting screws, which are fastened to allow a picot movement about their longitudinal axis.

Tensioning or detensioning the conveyor belt may be executed in various ways. In an advantage configuration, the first deflection assembly is configured to be manually actuated. An automatic or motorized option can also be possible.

Alternatively or additionally, the first deflection assembly includes an actuation device for at least partially automatically actuating first deflection assembly. The actuation device may be configured to support either the pivot movement of the first deflection assembly or may support the tensioning of the conveyor belt during operation. It also possible that the deflection assembly is configured to carry out both functions.

In a preferred embodiment, to put the conveyor belt under a defined tension during operation, the first deflection assembly includes a guide unit for linearly guiding the first deflection roller.

In a further preferred embodiment, at least one securing mechanism is provided for reversibly securing the first deflection assembly at least in one position, preferably a working or operating position. Thereby, safe operation of the injector apparatus is enabled.

The conveying module may be mounted to the injector apparatus in various ways. In an advantage design, the injector apparatus comprising at least a first attachment device by which the first deflection assembly is attached to the injector apparatus, and at least a second attachment device by which the second deflection assembly is attached to the injector apparatus. This allows to separately mount and demount the first and second deflection modules, whereby cleaning and maintenance is simplified.

For further simplifying mounting and demounting of the conveying module, the first and second attachment devices may be configured for tool-less or tool-free mounting and demounting the first and second deflection assemblies to and from the injection apparatus. In a simple case, a clamping mechanism may be provided for tool less mounting and demounting the first and second deflection assemblies.

In a preferred design of the injector apparatus, the conveyor module further includes a support device arranged between the first and second deflection assemblies, for supporting the conveyor belt, at least in the region below the injector module. The support device prevents the conveyor belt from sagging at least during the injection process.

The support devise is preferably arranged between the upper run und the lower run of the conveyor belt, for supporting the upper run. The support device may include a support plate that is arranged immediately below the upper run of the conveyor belt, which slides over the support plate. For reducing friction between the conveyor belt and the support device, at least the surface of the support plate contacting the conveyor belt, may be provided with a friction reducing coating or layer.

The support device, and particularly the support plate, may be fixedly attached to the frame work of the injector apparatus, or may detachable mounted thereto. In a simple case, the frame work of the injection apparatus is provided with support tabs, on which the support plate lays by gravity, or with which it may come into force-fit or form-fit engagement.

Alternatively, the support device is provided with support tabs, which may engage with respective openings in the frame work of the injection apparatus.

The conveyor belt may be of any suitable construction. The conveyor belt may be a conventional flat band made of a textile/rubber composition. In a further preferred design of the inventive injector apparatus, the conveyor belt is a link belt having at least one coupling element, for reversibly opening the conveyor belt. This allows an easy removal of the conveyor belt. Furthermore, fluid, like the injectate, may flow through the gaps between the belt links. It has to be understood that also the coupling element may tool less be removed and assembled.

The injector apparatus according to the present invention can comprise a control unit for at least controlling the operation of the injector apparatus. The control unit may be provided with different programs for treating different products, or an operator may input respective data for treating specific products.

Advantageously, the injector apparatus comprises at least one sensor device at least for detecting the presence or absence of at least one of the first or second deflection assemblies. Thereby, damages to the injector apparatus or production losses may be omitted. The sensor device may further monitor operations, functions or values of the injector apparatus, and may send respective data to the control unit, to which the sensor device is coupled. Based on the signals from the sensor unit, the control unit may control the operation of the injector apparatus, and e.g. may stop the injector apparatus in the case that the conveyor module or components thereof, are not correctly mounted.

According to the present invention, there is further provided a conveyor module for an injector apparatus for injecting an injectate, like brine, into a food product. The conveyor module includes at least a first deflection assembly with a first deflection roller and a second deflection assembly with a second deflection roller, and a conveyor belt guided around the first and the second deflection rollers, and the first deflection assembly is configured to be mountable and demountable to and from the injector apparatus independently from the second deflection assembly.

The inventive conveyor module thereby provides all advantages explained in conjunction with the inventive injector apparatus.

There is further disclosed an injector apparatus for injecting an injectate, like brine, into a food product. The apparatus comprises a frame work, at least one injector module, supported by the frame work, at least one conveying module for conveying a food product to be treated to the injector module and discharging the treated food product from the injector module, and at least one injectate collecting device for at least collecting injectate escaping from the food product while being treated. The conveyor module can also be supported by the frame work.

In the injector apparatus, the injectate collecting device includes at least one injectate collecting container or drawer being removable mounted to the frame work. The injectate collecting container can be moved reversibly between an operating or collecting position, which is the working position, and a non-operating position. In the non-operating position, the injectate collecting container can be cleaned and/or removed completely from the injector.

One injectate collecting container can be sufficient, for example if only one injector module is provided. In the example case of more than one injector modules, for example three injector modules, more than one injectate collecting container can be provided. If two injectate collecting container are present, the two containers can be removed from the front sides of the conveyor module, i.e., on its inlet side and on its outlet side, and reinserted there. If there are more than two injectate collecting containers, the containers arranged between the two front sides of the conveyor module can be removed on the side of the injector apparatus in a direction transverse to the conveying direction defined by the conveyor module and reinserted. A solution involving removal and reinsertion upwards and/or downwards relative to the conveyor module may also be possible.

The design of the injector apparatus allows a quick and easy removal of the injectate collecting container, e.g. for maintenance or cleaning. Moreover, the specific design enables the provision of smaller assemblies and parts, which reduces manufacturing and assembly costs, in particular, the provision of a U-shaped injection tunnel with a complex design, is not necessary. In a preferred embodiment of the injector apparatus, the frame work can include a support and guide arrangement having at least one approximately horizontally arranged support and guide rail for supporting the injectate collecting container in a working position and for guiding the injectate collecting container between a collecting or working position and non-operating position . Thereby, the injectate collecting container may easily be attached to and removed from the injector apparatus. In a preferred embodiment, there are provided at least two support and guide rails arranged inside a tunnel of the framework. Preferably, the two guide rails are arranged at least approximately in the area of the lower corner edges of the tunnel.

In a further preferred embodiment, the support and guide rail can include a securing device for securing or arranging the injectate collecting container on the support and guide rail in a predefined position, preferably, the collecting or working position. In a simple case, the securing device may include at least one stop block at the end of the guide rail, which prevent unintentional sliding of the injectate collecting container on the guide rail, e.g. caused by vibrations during an injection operation. Alternatively or additionally, the securing device may include releasable locking or clamping means, for releasably locking the injectate collecting container in its predefined or working position on the guide rails.

It has to be noted that it is also possible that the one or more support and guide rails may integrally be formed to the frame work or a portion of the frame work, like side plates.

The injectate collecting container may have any suitable design. The injectate collecting container may preferably adapted to the specific design of the injection apparatus, and in particular to the space available below the conveyor module.

Advantageously, the injectate collecting container can have an at least approximately rectangular bottom portion and a wall extending upwardly from the bottom portion and completely surrounding the bottom portion. The injectate collecting container thereby forms a collection space for the injectate escaping from the food product, as well as for particles falling off from the food product. The bottom portion can be designed such that the collected injectate flows to a predetermined location at the bottom portion. For example, the bottom portion can be inclined relative to the horizontal and/or has a V-shaped cross-section. Of course, it may also be possible that the bottom portion has two opposing inclinations and/or V-shaped cross-sections in order to guide the collected injectate to a specific location in or at the bottom portion, for example, to the geometric center of the bottom section.

Further advantageously, the support and guide arrangement can comprise an injectate guide arrangement for guiding injectate escaping from the injector module or the food product being treated, to the injectate collecting container. This design prevents injectate from flowing past the injectate collecting container. In a preferred embodiment, the injectate guide arrangement can be attached at least in sections to preferably vertically extending side walls of the frame work supporting the injectate collecting container, and above the injectate collecting container. The injectate guide arrangement can be formed by at least one strip section, preferably made of sheet metal, which extends diagonally downward relative to the side walls in the direction of the injectate collecting container, similar to a building canopy. Preferably, the guide arrangement may include longitudinally extending elements with an angled or V-shaped cross-sectional profile. The longitudinally extending elements may be arranged on the vertically extending side walls of the frame work, with the open end of the "V" facing downwards, such that one leg of the "V" inclines away from said side walls, such that the longitudinal edge of this leg is positioned above the injectate collecting container. Thereby, injectate flowing down the vertically extending side wally may drip into the injectate collecting container.

In order to guide the injectate collected in the injectate collecting container, in a preferred design, the injectate collecting container can further include a drainage connector for discharging the injectate collected in the injectate collecting container or discharging the injectate from the injectate collecting container. The drainage connector may connect the injectate collecting container to a receptacle, like a further container, in which the injectate is collected, e.g. for being reused.

For enhancing the reuse of the injectate collected in the injectate collecting container, it is further preferred that the injectate collecting device comprises a exchangeable filter unit for filtering the injectate collected by the injection collection device. In a simple design, such a filter unit may include a sieve, for at least removing larger particles from the injectate. However, a more fine filter or other treatment devices may be provided, for cleaning the injectate prior reuse.

The filter unit may be placed in any appropriate position between the injectate collecting container and a further collecting container. Advantageously, the filter unit is arranged below the drainage connector of the injection collection container, whereby the injectate may directly flow into the filter unit, e.g. by gravity, without any additional pump unit or the like.

Further advantageously, the filter unit includes a particle collection container, which is preferably removable mounted to the filter unit. Thereby, cleaning of the filter unit is enhanced, and blockages of the filter unit or subsequently arranged devices may be prevented.

In a preferred design, the injector apparatus comprising an injectate delivery device for delivering injectate to the injector module. The injectate delivery device may include a pump unit for pumping injectate from an injectate supply to the injector module. By controlling the operation of the pump unit, pressure and/or flow rate of injectate delivered to the injector module may be adjusted.

The injectate collecting, the filter unit container, coupled to by the drainage connector of the injectate collecting container, the receptacle arranged subsequent to the filter unit, and the injectate delivery device may form an circuit for the injectate, In this circuit, the injectate escaped from the food product, may circulate from the injectate collecting container via the filter unit into the receptacle, which may be a subsequently arranged collecting container, from which the injectate delivery device feeds the injectate to the injector module.

This injectate circuit may further include a delivery arrangement for delivering fresh injectate, which may e.g. be fed into the receptacle or collecting container being arranged subsequently to the filter unit, such that the injectate delivery device feeds the injectate collected by the injectate collecting device as well as fresh injectate to the injectate to the injector module.

The pump can also be provided for sucking the injectate from the injectate collecting container and/or a further container into which the collected injectate is guided from the injectate collecting container for temporary storage and/or purification of the injectate.

The injector apparatus can further comprise a control unit for at least controlling the operation of the injector apparatus. The control unit may be provided with preset programs including specific parameters, like the injection speed, the amount of injectate to be injected and/or the injection time, for treating specific food products.

Alternatively or additionally, an operator may manually input parameters of an injection process.

In a preferred embodiment, the injector apparatus comprises at least one sensor device including at least a first sensor element for at least detecting the presence or absence of the injectate collecting container in a working position and preferably the level of the collected injectate in the injectate collecting container, which alternatively may be monitored by a second sensor device with a respective sensor element. Thereby, safe operation of the injector apparatus is enabled, and spraying of injectate onto other components of the injector apparatus or into the environment is prevented by preventing an overflow of injectate from the injectate collecting container.

It is of advantage that the sensor device is coupled to the control unit of the injector apparatus. Based on the data received from the sensor device, the control unit may continue the operation or may stop the injector apparatus, e.g. in the case that the supply of injectate in emptied, no food products are positioned on the conveyor module, the filling degree of the injectate collecting container and/or the filter unit has reached a predefined maximum value, i.e. the filter unit is largely filled with filter residues.

In a preferred embodiment of the injector apparatus, the conveying module is removable mounted on the framework. This design allows a quick removal of the conveyor module from the injector apparatus, and an further simplifies cleaning and maintenance of the injector apparatus.

In the following, further advantages and embodiments of the inventive injector apparatus und conveyor module are described in conjunction with the attached drawings. Thereby, the expressions "*left*", "*right*", "*below*" and *"above"* are referred to the drawings in an orientation of the drawings, which allows the normal reading of the reference numbers.

### In the drawings:

- Fig. 1:: is a perspective view to the front side of an injector apparatus for treating food products according to the present invention;
- Fig. 2:: is a perspective view to the conveying module of the injector apparatus according to Fig. 1;
- Fig. 3:: is a perspective view to the conveying module of Fig. 2, in which the conveyor belt has been removed;
- Fig. 4:: is a perspective view from below to the first deflection assembly of the conveying module of Fig. 2;
- Fig. 5:: is an enlarged perspective partial view to the front side of the injector apparatus according to Fig. 1, seen from right, and in which the conveying module has been removed; and
- Fig. 6:: is an enlarged perspective partial view to the front side of the injector apparatus according to Fig. 5, seen from left.

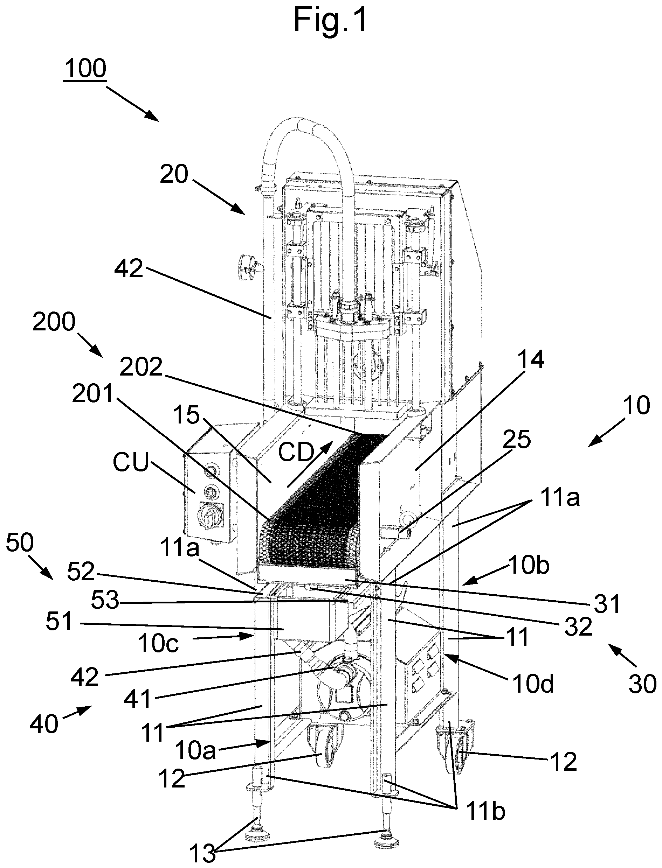

Fig. 1 shows an injector apparatus 100 for treating food products according to the present invention.

Injector apparatus 100 comprises a frame work 10, an injector module 20 supported by frame work 10; an injection collection device 30 for at least collecting injectate escaping from injection needles of the injector module 20 and/or the food product while being treated, an injectate delivery device 40 for delivering injectate to injector module 20, and a control unit CU for controlling the operation of injector apparatus 100. Injector apparatus 100 further comprises a conveying module 200, for conveying a food product to be treated to the injector module 20 and discharging the treated food product from the injector module 20 in a conveying direction CD.

Frame work 10 has a front side 10a, a rear side 10b, a left side 10c and a right side 10d, and includes four vertical corner posts 11, with upper ends 11a and lower ends 11b, which form an approximately cuboid accommodation space. In said accommodation space, an injectate pump 41 of injectate delivery device 40 for delivering injectate to injector module 20 is arranged. Injectate delivery device 40 further comprises tubing 42 via which injectate pump 41 delivers injectate to injector module 20. Lower ends 11b of rear side corner posts 11 are provided with rollers 12, for moving injector apparatus 100, and, at lower ends 11b of front side corner posts 11, adjustable feet 13 are arranged, for adjusting or levelling injector apparatus 100 at the installation location.

Frame work 10 further includes a first approximately rectangular side plate 14 arranged on upper ends 11a of corner posts 11 of right side 10b of frame work 10, and a second approximately rectangular side plate 15 arranged on upper ends 11a of corner posts 11 of left side 10c of frame work 10. First and second side plates 14, 15 extend vertically and parallel to each other, with injection module 20 supported on their upper edges, which are aligned at least approximately horizontally.

Between the lower edges of first and second side plates 14, 15, injection collection device 30 is arranged. Injection collection device 30 includes an approximately cuboid injection collection container 31 with a drain connector 32 arranged at the bottom of injectate collection container 31, and in the region its front end.

A filter unit 50 is arranged in the front region of frame work 10 and below drain connector 32a of injectate guide arrangement 32, for filtering injectate collected by injection collection container 31. Filter unit 50 includes a filter container 51, into which the injectate collected by injectate collecting container 31 is guided by drain connector 32a. Filter container 51 has an approximately cuboid shape, and is made of a suitable material, like stainless steel. Two support brackets 52, 53 are mounted in the region of upper ends 11a of corner posts 11 at the front side 10a of frame work 10. Support brackets 52, 53 have an at least approximately horizontal upper portion, for removable supporting filter container 51 below drain connector 32a.

Conveying module 200 has a first end 201 and a second end 202, is arranged at least approximately horizontally above injection collection device 30, and below injector module 20, such that its first end 201 is aligned with front side 10a of frame work 10, and its second end 202 is aligned with rear side 10b of frame work 10.

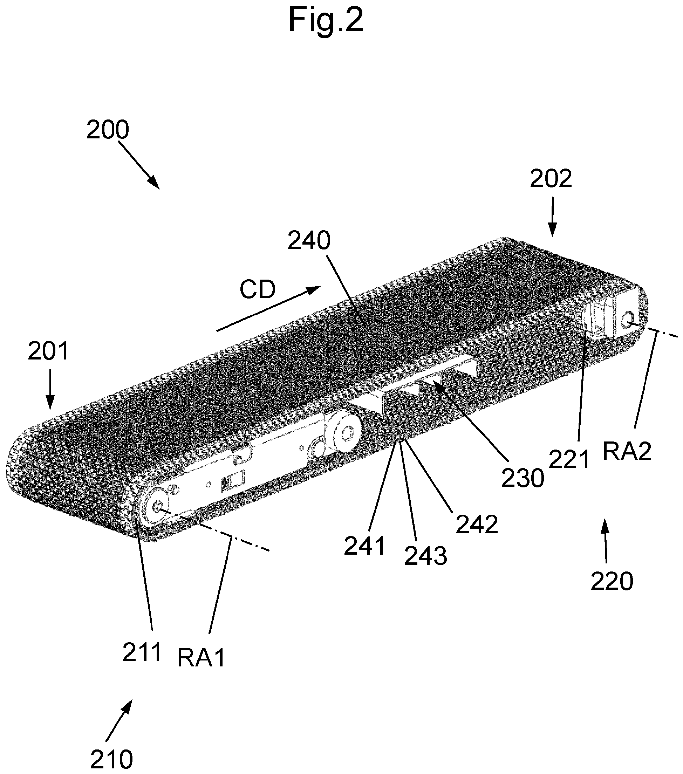

As can be seen in Fig. 2, conveying module 200 has a first deflection arrangement 210 with a first deflection roller 211, a second deflection arrangement 220 with a second deflection roller 221, and a support device 230 arranged between the first and second deflection assemblies 210, 220. First deflection roller 211 has a rotation axis RA1 that extends at least approximately horizontally, and perpendicular to conveying direction CD. Second deflection roller 221 has a rotation axis RA2 that is aligned parallel to rotation axis RA1 of first deflection roller 211.

A conveyor belt 240 is wound about first and second deflection rollers 211, 221. Conveyor belt 240 has a first end 241, a second end 242, and is realized as a linked belt consisting of a plurality of links. A belt lock in the form of a pin 243, which extends across to conveyor belt 240, detachably connects two neighbouring links, namely the link that forms first end 241 and the link that forms second end 242 of conveyor belt 240. For opening or closing conveyor belt 240, pin 241 may be pulled out of conveyor belt 240, or may be pushed back into respective corresponding connecting portion of the links at first and second ends 241, 242.

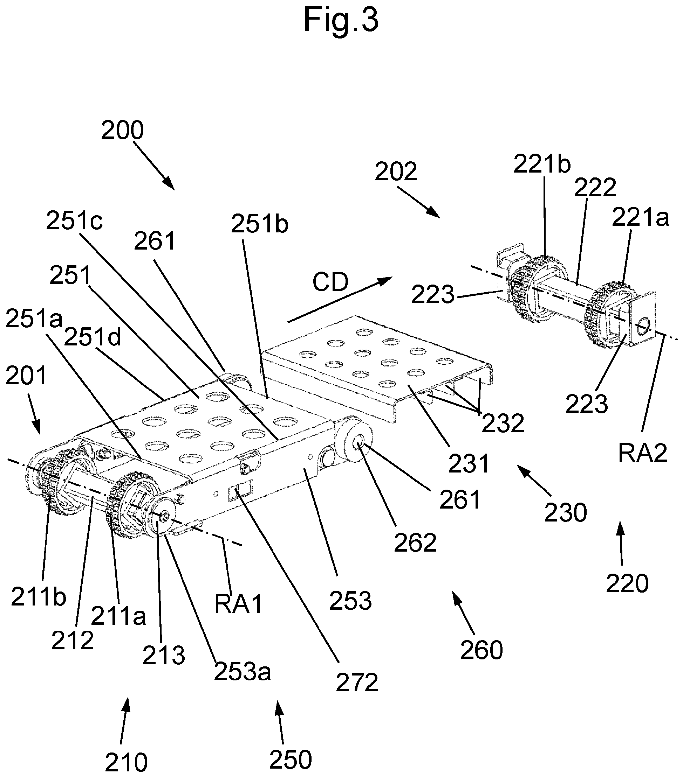

As it can be seen in Fig. 3, which shows conveying module 200, in which the conveyor belt 240 has been removed, first and second deflection rollers 211, 221 of first and second deflection assemblies 210, 220 are realized by pairs of deflection rollers 211a, 211b; 221a, 221b. Each pair of deflection rollers 211a, 211b; 221a, 221b is arranged on an axle 212, 222 having a rectangular cross-section.

The outer ends of axle 222 of second deflection roller 221 of second deflection assembly 220 are supported in bearings 223, which allow rotation of second deflection roller 221 about rotation axis RA2. Bearings 223 have a cuboid housing.

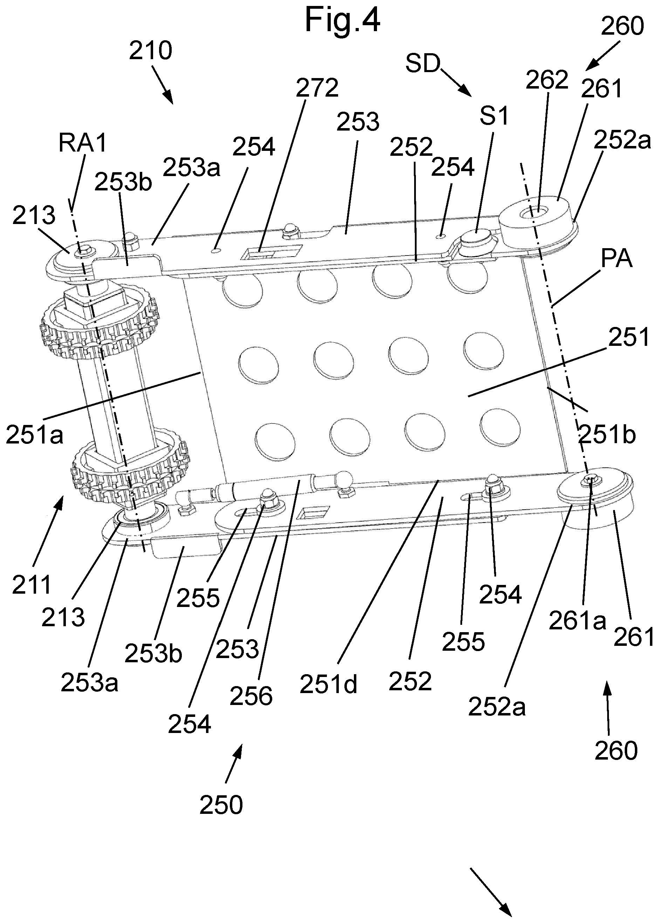

First deflection assembly 210, as can be seen in Figs. 3 and 4, includes a support frame work 250 for supporting first deflection roller 211. Support frame work 250 comprises an approximately horizontally arranged rectangular plate 251 with a font edge 251a facing towards first end 201 of conveyor module 200, a rear edge 251b facing towards second end 202 of conveyor module 200, a left side edge 251c and a right side edge 251d that are aligned parallel to each other and to conveying direction CD.

Rectangular plate 251 has two elongated plate portions 252, which are arranged at left and right side edges 251c, 251d, and which extend perpendicular to and downwardly from rectangular plate 251. Each plate portion 252 extends from font edge 251a towards rear edge 251b, and exceeds rear edge 251b. The ends of plate portions 252, which exceed rear edge 251b form mounting portions 252a, at the outside of which cylindrical mounting elements 261 of a mounting assembly 260 are arranged. In mounting elements 261, cylindrical mounting wholes 262 are arranged.

Support frame work 250 further comprises two deflection roller support plates 253, which have a height that corresponds to the height of plate portions 252. Deflection roller support plates 253 are arranged at the outer surfaces of plate portions 252, and extend from rear edge 251b towards front edge 251a, and exceed front edge 251a. The ends of deflection roller support plates 253, which exceed front edge 251a create deflection roller support portions 253a, with support bearings 213 which support first deflection roller 211, and which allow first deflection roller 211 to rotate about rotation axis RA1.

Each deflection roller support plate 253 is mounted to the respective plate portion 252 by two bolts 254. In plate portions 252, elongated wholes 255 are provided, through which bolts 254 are guided. Elongated wholes 255 are aligned parallel to left and right side edges 251c, 251d, such that first deflection roller 211, together with deflection roller support plates 253, may reversibly be shifted in conveying direction CD. First deflection assembly 210 further includes two tensioning elements 256. Each tensioning element 256 is coupled with one end to one of deflection roller support plates 253, and with the other end to the respective plate portions 252. Tensioning elements 256, which in the present embodiment are air springs, are oriented such that first deflection roller 211 is pushed away from front edge 251a of rectangular plate 251.

Support device 230, which is arranged between the first and second deflection assemblies 210, 220, includes an approximately rectangular support plate 231, which is horizontally and with regard to conveying direction CD aligned with rectangular plate 251 of support frame work 250. At the lower side of support plate 231, reinforcing ribs 232 are arranged. Support device 230 is positioned below injector module 20, when conveyor module 200 is in the working position. Thereby, support device 230 supports conveyor belt 240 during the injection process, and in particular, the forces exerted by injector module 20 on the portion of conveyor belt 240 arranged below injector module 20.

Rectangular plate 251 of support frame work 250 and support plate 231 of support device 230 are provided with through holes for enabling injectate to flow through plates 251 and 231 towards injection collecting container 31.

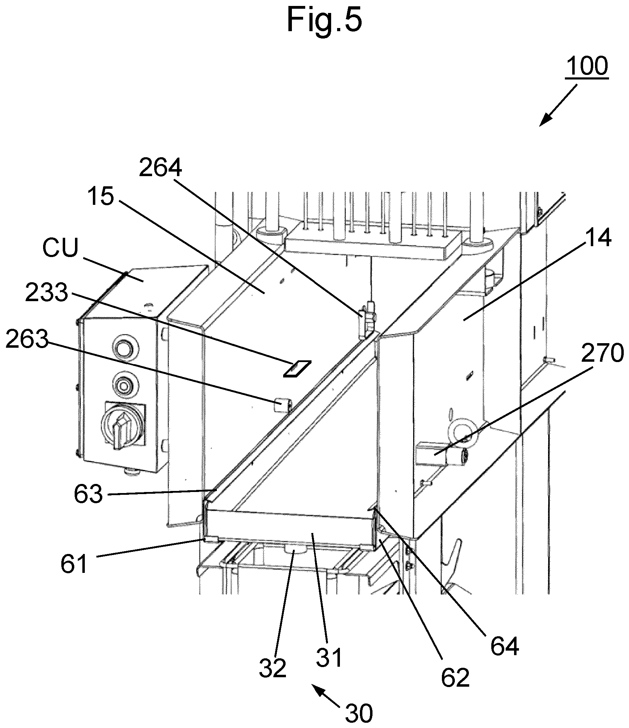

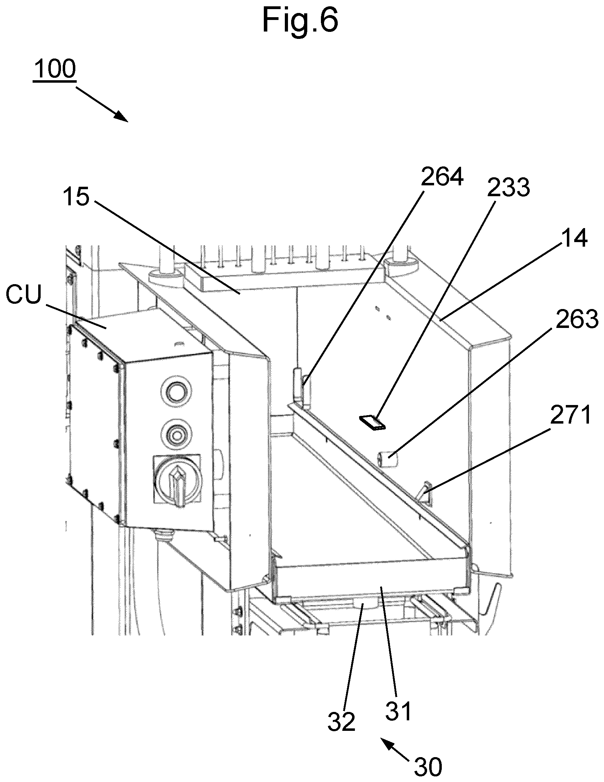

Figs. 5 and 6 are enlarged perspective partial views to the front side of injector apparatus 100 according to Fig. 1, seen from right (Fig. 5) and seen from left (Fig. 6).

First and second side plates 14, 15 extend vertically and parallel to each other, with injection collection device 30 arranged between their lower ends. Injection collecting container 31 of injection collection device 30 is supported on horizontally arranged support and guide rails 61, 62. Longitudinally extending guide elements 63, 64 are arranged at first and second side plates 14, 15 such that guide elements 63, 64 extend along the upper edges of injectate collecting container 31. Injectate flowing down first and second side plates 14, 15, guided by guide elements 63, 64, may drip into injectate collecting container 31. Guide elements 63, 64, or portions thereof, may also function as support elements for conveyor module 200.

Mounting counter elements 263 in the form of cylindrical bolts are arranged above guide elements 63, 64 and at the surfaces of first and second side plates 14, 15 facing each other. Mounting counter elements 263 are arranged at a position that corresponds to the position of mounting wholes 262 in mounting elements 261, when conveyor module 200 is in the working position, such that mounting elements 261 cooperate with mounting counter elements 263 fixed to first and second side plates 14, 15 of frame work 10 (cf. Figs. 5 and 6). Mounting counter elements 263, in this embodiment, are cylindrical bolts, which engage cylindrical mounting holes in mounting elements 261. For mounting first deflection assembly 210 to injector apparatus 100, mounting portions 252a and mounting elements 261 are fixed to first and second side plates 14, 15 by mounting screws 261a.

As particularly can be seen in Fig. 4, a pivot axis PA extends centrally through mounting elements 261, about which support frame work 250 together with first deflection roller 211 may be pivoted. Mounting elements 261 together with mounting counter elements 263 form a pivot mechanism, such that first deflection assembly 210 may pivot about pivot axis PA. Mounting screws 261a are tightened such that pivot movement of first deflection assembly 210 about pivot axis PA is enabled.

As it further can be seen in Fig. 4, at their lower edges, each deflection roller support portion 253a is provided with a support latch 253b, which extend outwardly from deflection roller support portions 253a. Conveyor module 200, and in particular, first deflection assembly 210 is supported on guide elements 63, 64 by support latches 253b. Support latches 253b also prevent first deflection assembly 210 from pivoting downwards into injectate collecting container 31.

In the region of the rear end of injectate collecting container 31 and immediately above guide elements 63, 64, approximately U-shaped receiving elements 264 are arranged at the surfaces of first and second side plates 14, 15 facing each other, with the open end of the "U" facing upwardly. The size of U-shaped receiving elements 264 corresponds to the size of the cuboid housing of bearings 223 of second deflection assembly 220. Second deflection assembly 220 may detachably mounted to injector apparatus 100 by inserting the cuboid housings of bearings 232 into U-shaped receiving elements 263.

Furthermore, conveyor module 200 is provided with a securing mechanism 270 for securing first deflection assembly 210 in the working position. Securing mechanism includes a securing element 271 (see Fig. 6), which engages into a recess 272 in plate portion 252 and deflection roller support plate 253 at left side edge 251c of rectangular plate 251 (cf. Figs. 3 and 4). Securing mechanism 270 may manually be moved out of a locking position to allow pivot movement of first deflection assembly 210, and be spring-loaded for automatically moving securing mechanism 270 into the locking position.

Furthermore, at the surfaces of first and second side plates 14, 15 facing each other, support tabs 233 are arranged between mounting counter elements 263 and receiving elements 264, on which support plate 231 of support device 230 may be placed. Support tabs 233 extend towards each other and provide a horizontal upper surface, sufficiently sized to hold support plate 231 in position. Support tabs 233 may alternatively be attached to support plate 231, and arranged such that they engage into respective support holes, like rectangular receiving holes, in first and second side plates 14, 15.

Moreover, a sensor device SD is provided (see Fig. 4), which includes a first sensor element S1 arranged at one of plate portions 252, which cooperates with a second sensor element (not shown) at one of first or second side plates 14, 15, for detecting first deflection assembly 210 in the working position.

It has to be understood that further sensor devices may be provided, e.g. for detecting second deflection assembly 220 in the working position, or for monitoring the injection process or functions of components of injector apparatus 100.

The one or more sensor devices are coupled to control unit CU, which may control injector apparatus 100 on the basis of the signals received from the sensor devices. Control unit CU may continue the operation of injector apparatus 100, e.g. based on one or more specific programs stored in control unit CU, or control unit CU may stop injection apparatus 100, e.g. in the case that one or more sensor signals leave an allowed range, or that e.g. first deflection assembly 210 is not in the working position. Furthermore, a signal may be sent to an operator that may include the kind of problem detected by a respective sensor device.

For removing conveying module 200 from injection apparatus 100, e.g. for cleaning or maintenance, securing mechanism 270 for securing first deflection assembly 210 in the working position is unlocked such that securing element 271 comes out of engagement with recess 272 in plate portion 252 and deflection roller support plate 253. Then, first end 201 of conveying unit 200 may be pivoted upwardly until conveyor belt 240, which in the working position is tensioned by tensioning elements 256, is sufficient slackened, and pin 243 may be pulled out of conveyor belt 240, for separating first and second ends 241, 242 of conveyor belt 240, which can be removed from injector apparatus 100.

After conveyor belt 240 has been removed from injector apparatus 200, support plate 231 of support device 230, which just lays on support tabs 233, may now be removed.

Second deflection assembly 220 may be removed from injector apparatus 100 by lifting it upwardly, whereby the housings of bearings 223 are moved out of receiving elements 264. Second deflection assembly 220 may completely be removed from injector apparatus 100, without demounting parts or units thereof. It has to be understood that the housings of bearings 223 may be secured in receiving elements 264 against unintentional removal, e.g. by a respective locking mechanism, that preferably manually may be unlocked and that automatically locks housings of bearings 223 in receiving elements 264.

For removing first deflection assembly 210, 261a, mounting screws 261a are loosened and removed, such that first deflection assembly 210 may completely be taken away from injector apparatus 100, without demounting parts or units thereof.

First and second deflection assemblies 210, 220, and support device 230 may now separately be cleaned or maintained.

For reassembling conveyor module 200, first deflection assembly 210 is placed at front end 10a of frame work 10, between first and second side plates 14, 15. Mounting elements 261 are placed on mounting counter elements 263, which engage mounting holes 262. Mounting portions 252a and mounting elements 261 are now fixed to first and second side plates 14, 15 by mounting screws 261a.

Second deflection assembly 220 is positioned on injector apparatus by inserting the housings of bearings 223 into receiving elements 264. In the case that a locking mechanism is provided, the housings of bearings 223 may preferably automatically be locked in receiving elements 264, against unintentional removal.

Support device 230 is reassembled to injector apparatus 100 by placing support plate 231 on support tabs 233.

Now, conveyor belt 240 may be guided around first and second deflection rollers 211, 221, whereby first deflection assembly 210 is pivoted upwardly. First and second ends 241, 242 of conveyor belt 240 are coupled to each other by belt lock or pin 243. Then, first deflection assembly 210 may be pivoted downwardly until support latches 253b abut against guide elements 63, 64. Thereby, conveyor belt 240 is tensioned by tensioning elements 256. During pivoting downwards first deflection assembly 210, first deflection roller, together with deflection roller support plates 253, may reversibly move in conveying direction CD against the force of tensioning elements 256, guided by bolts 254, which extend through elongated wholes 255. In the working position, first deflection roller 211, urged by tensioning elements 256 in the counter direction of conveying direction CD, tensions conveyor belt 240.

After conveyor module 200 is reassembled to injector apparatus 100, and prior an injection operation, sensor device SD detects first deflection assembly 210 in the working position, and sends a respective signal to control unit CU, which allows operation of injector apparatus 100.

Naturally, further sensor devices may be coupled to control unit CU, such that the signal from sensor device SD is not the only signal, on the basis of which injector apparatus 100 is started.

## Claims

1. An injector apparatus (100) for injecting an injectate, like brine, into a food product, the apparatus (100) comprising:
a frame work (10),
at least one injector module (20) supported by the frame work (10), and
an at least one conveying module (200) arranged approximately horizontally, for conveying a food product to be treated to the injector module (20) and discharging the treated food product from the injector apparatus (100) in a conveying direction (CD),
wherein the conveying module (200) has a first deflection assembly (210) with at least a first deflection roller (211), a second deflection assembly (220) with at least a second deflection roller (221), and a conveyor belt (240) guided around the first and the second deflection rollers (211, 221), wherein the first deflection assembly (210) is configured to be demountable from the injector apparatus (100) independently from the second deflection assembly (220).

2. The injector apparatus (100) according to claim 1,
wherein the first deflection assembly (210) is configured to reversibly relax the tension of the conveyor module (200).

3. The injector apparatus (100) according to claim 1 or 2,
wherein a pivot axis (PA) is arranged between the first and second deflection rollers (211, 221).

4. The injector apparatus (100) according to any of claims 1 to 3,
wherein the first deflection assembly (210) is configured to rotate around the pivot axis (PA) extending through the first deflection assembly (210).

5. The injector apparatus (100) according to claims 3 or 4,
wherein the first deflection assembly (210) includes a pivot mechanism (261, 263) for reversibly pivoting the first deflection roller (211) between a working position and a release position, about the pivot axis (PA) arranged between the first and second deflection rollers (211, 221).

6. The injector apparatus (100) according to any of claims 1-5,
wherein the first deflection assembly (210) is configured to be manually actuated.

7. The injector apparatus (100) according to any of claims 1-5,
wherein the first deflection assembly (210) includes an actuation device for at least partially automatically actuating the first deflection assembly (210).

8. The injector apparatus (100) according to any of claims 1-7,
wherein at least one securing mechanism (270) is provided for reversibly securing the first deflection assembly (210) at least in one position, preferably a working position.

9. The injector apparatus (100) according to any of claims 1-8,
further comprising at least a first attachment device (260) by which the first deflection assembly (210) is attached to the injector apparatus (100), and at least a second attachment device (264) by which the second deflection assembly (220) is attached to the injector apparatus (100).

10. The injector apparatus (100) according to claim 9,
wherein the first and second attachment devices (260, 264) are adapted for tool-less mounting and demounting the first and second deflection assemblies (210, 220) to and from the injection apparatus (100).

11. The injector apparatus (100) according to any of claims 1-10,
wherein the conveyor module (200) further includes a support device (230) arranged between the first and second deflection assemblies (210, 220) for supporting the conveyor belt (240), at least in the region below the injector module (20).

12. The injector apparatus (100) according to any of claims 1-11,
wherein the conveyor belt (240) is a link belt having at least one coupling element (243), for reversibly opening the conveyor belt (240).

13. The injector apparatus (100) according to any of claims 1-12,
further comprising a control unit (CU) for at least controlling the operation of the injector apparatus (100).

14. The injector apparatus (100) according to any of claims 1-13,
further comprising at least one sensor device (SD) for detecting the presence or absence of at least one of the first or second deflection assemblies (210, 220).

15. A conveyor module (200) for an injector apparatus (100) for injecting an injectate, like brine, into a food product,
wherein the conveyor module (200) includes at least a first deflection assembly (210) with at least a first deflection roller (211) and at least a second deflection assembly (220) with at least a second deflection roller (221), and a conveyor belt (240) guided around the first and the second deflection rollers (211, 221), and
wherein the first deflection assembly (210) is configured to be mountable and demountable to and from the injector apparatus (100) independently from the second deflection assembly (210).
